# FASCICULE DE BREVET EUROPEEN

(11) **EP 1 966 469 B1**
(45) Date de publication et mention de la délivrance du brevet: **04.07.2012**
(21) Numéro de dépôt: 06831290.9
(22) Date de dépôt: 24.10.2006
(51) Int. Cl.: F01N 3/08, F01N 3/28, F01N 3/025, B01D 53/94, F01N 3/035

(54) **LIGNE D'ECHAPPEMENT DES GAZ NOTAMMENT POUR MOTEUR DIESEL DE VEHICULE AUTOMOBILE**
ABGASLEITUNG; INSBESONDERE FÜR EINEN KRAFTFAHRZEUGDIESELMOTOR
EXHAUST GAS LINE, IN PARTICULAR FOR A MOTOR VEHICLE DIESEL ENGINE

(30) Priorité: 27.10.2005 FR 0511006
(43) Date de publication de la demande: 10.09.2008
(73) Titulaire: PEUGEOT CITROËN AUTOMOBILES S.A., 78140 Vélizy Villacoublay (FR)
(72) Inventeur: TRONEL, Frédéric, F-92600 Asnières Sur Seine (FR)
(74) Mandataire: Ménès, Catherine
(86) Numéro de dépôt international: PCT/FR2006/051096
(87) Numéro de publication internationale: WO 2007/048971

(56) Documents cités:
- EP-A- 1 250 952
- EP-A- 1 510 670
- EP-B1- 0 796 137
- WO-A-2005/005797
- DE-A1- 10 321 105
- FR-A1- 2 880 065
- US-A1- 2005 060 992
- STEIN ET AL: "Diesel oxidation catalysts for commercial vehicle engines: strategies on their application for controlling particulate emissions", APPLIED CATALYSIS B: ENVIRONMENTAL, ELSEVIER LNKD- DOI:10.1016/0926-3373(96)00024-0, vol. 10, no. 1-3, 14 September 1996 (1996-09-14), pages 69-82, XP022226500, ISSN: 0926-3373

## Description

La présente invention concerne une ligne d'échappement de gaz pour moteur de véhicule automobile.

Les polluants issus de la combustion d'un moteur de véhicule automobile que celui-ci soit un moteur Diesel ou essence, sont majoritairement des hydrocarbures imbrûlés, des oxydes d'azote (monoxyde d'azote NO et dioxyde d'azote NO2), les oxydes de carbone (monoxyde de carbone CO) et dans le cas des moteurs Diesel et des moteurs à injection directe à essence, des particules.

Afin de respecter les normes environnementales internationales, la maîtrise des émissions de HC, de CO, de NOx et de particules est impérative et des technologies de post-traitement des gaz sont indispensables.

Dans l'état de la technique, les systèmes de post-traitement Diesel de ce type sont constitués par un catalyseur d'oxydation et dans un certain nombre de cas, par un filtre à particules. Dans ces derniers cas, le filtre à particules, qui retient les particules carbonées, doit être régénéré périodiquement. Cette régénération est obtenue par élévation de la température du filtre jusqu'à une température comprise entre 450°C à 700°C, de façon classique.

Cette température est obtenue par une élévation de la température des gaz en sortie du moteur et par la génération d'un exotherme supplémentaire par oxydation d'HC et CO émis par le moteur au sein du catalyseur.

Cependant, la génération régulière d'exotherme sur les catalyseurs est à l'origine d'un vieillissement accéléré de ces derniers, ce qui amène à limiter l'intensité de l'exotherme qui peut être généré. Par ailleurs, l'utilisation de post-injections, c'est-à-dire d'injections de carburant tardives après le point mort haut du cycle, qui entraîne des fortes émissions d'HC et CO à l'échappement afin de générer l'exotherme, est à l'origine d'une importante dilution du gazole dans l'huile de lubrification du moteur. Or, cette lubrification est préjudiciable à la durée de vie du moteur.

Des solutions consistant à remplacer cette post-injection par une introduction de carburant à l'échappement afin de générer l'exotherme, ont déjà été développées, mais les lignes d'échappement connues actuellement ne permettent pas de tirer pleinement profit d'un tel système car les formulations catalytiques adaptées à la dépollution HC-CO ne tolèrent pas de très forts exothermes. Par ailleurs, une bonne efficacité de dépollution HC-CO nécessite un positionnement de catalyseur proche de la sortie des gaz du moteur alors que l'introduction de carburant à l'échappement nécessite une distance d'homogénéisation du mélange et donc une éloignement de catalyseur.

Il est connu de la publication DE 10321105 une ligne d'échappement comportant un premier catalyseur d'oxydation disposé juste en sortie de moteur, un injecteur de carburant, un mixeur - pouvant être constitué par un turbocompresseur, et un filtre à particules avec juste en amont de ce filtre un second catalyseur d'oxydation, les deux catalyseurs d'oxydation étant éloignés d'au moins 0,5 mètre.

Le but de l'invention est donc de résoudre ces problèmes.

A cet effet, l'invention a pour objet une ligne d'échappement des gaz notamment pour moteur Diesel de véhicule automobile, du type comportant des moyens formant catalyseur d'oxydation et des moyens formant filtre à particules, comportant des premiers moyens formant catalyseur placés à proximité de la sortie des gaz du moteur et des moyens d'introduction de carburant dans la ligne d'échappement en aval de ces moyens formant catalyseur et en amont de seconds moyens formant catalyseur associés aux moyens formant filtre à particules, pour aider à leur régénération, caractérisée en ce que les premier et second catalyseurs sont choisis tels que la température d'allumage des premiers moyens formant catalyseur est inférieure à celle des seconds moyens formant catalyseur et en ce que ces seconds moyens formant catalyseur sont placés à une distance supérieure à 30 cm des moyens d'introduction de carburant dans la ligne d'échappement.

Suivant d'autres caractéristiques de l'invention :
- les premiers moyens formant catalyseur comportent des métaux précieux majoritairement à base de platine ;
- les seconds moyens formant catalyseur comportent des métaux précieux majoritairement à base de palladium ;
- les seconds moyens formant catalyseur et les moyens formant filtre à particules sont intégrés sur un même support ;
- les seconds moyens formant catalyseur et les moyens formant filtre à particules sont intégrés sur deux supports différents ;
- elle comporte des moyens formant piège à NOx en aval des moyens d'introduction ;
- le carburant comporte un additif d'aide au traitement des gaz et à la régénération des moyens formant filtre à particules ; et
- le moteur est associé à des moyens d'aide à la régénération des moyens formant filtre à particules, par déclenchement d'une phase de post-injection de carburant dans les cylindres de celui-ci.

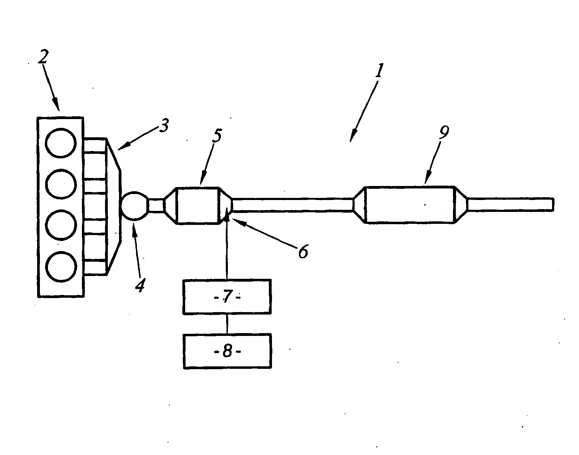

L'invention sera mieux comprise à la lecture de la description qui va suivre, donnée uniquement à titre d'exemple et faite en se référant au dessin annexé, qui représente un schéma synoptique illustrant la structure d'un exemple de réalisation d'une ligne d'échappement selon l'invention.

On a en effet illustré sur cette figure, une ligne d'échappement notamment pour moteur de véhicule automobile, cette ligne d'échappement étant désignée par la référence générale 1.

Le moteur est quant à lui désigné par la référence générale 2 et se présente par exemple sous la forme d'un moteur Diesel à quatre cylindres.

Bien entendu, d'autres types de moteurs peuvent être envisagés.

Ce moteur est associé à un collecteur des gaz d'échappement en sortie des cylindres du moteur désigné par la référence générale 3, et à un turbocompresseur désigné par la référence générale 4, débouchant dans la ligne d'échappement.

Cette ligne d'échappement comporte des moyens formant catalyseur d'oxydation et des moyens formant filtre à particules.

Des moyens formant piège à NOx peuvent également être envisagés.

Dans l'exemple de réalisation illustré, la ligne d'échappement comporte des premiers moyens formant catalyseur placés à proximité de la sortie des gaz du moteur.

Ces premiers moyens formant catalyseur sont désignés par la référence générale 5 sur cette figure et permettent alors de traiter les émissions d'HC et CO du moteur afin d'être compatible avec les normes antipollution.

Ces premiers moyens formant catalyseur sont caractérisés par une faible température d'allumage/amorçage et une bonne résistance au soufre.

Par exemple, les métaux précieux de ce catalyseur sont en majorité du platine.

La ligne d'échappement comporte également des moyens d'introduction de carburant comme par exemple du gazole, dans la ligne d'échappement en aval de ces premiers moyens formant catalyseur 5.

Ces moyens d'introduction sont désignés par la référence générale 6 sur cette figure et comprennent par exemple des moyens de pilotage de l'introduction désignés par la référence générale 7 à partir d'un réservoir de carburant 8 du véhicule.

Ceci permet alors d'introduire du carburant dans la ligne d'échappement en aval des premiers moyens formant catalyseur 5 et en amont de seconds moyens formant catalyseur associés aux moyens formant filtre à particules afin d'aider à leur régénération.

Ces moyens sont désignés par la référence générale 9 sur cette figure et comprennent alors une association de moyens formant catalyseur et de moyens formant filtre à particules, qui peuvent être déposés par exemple sur deux supports différents ou encore être intégrés sur un même support de façon classique.

En fait, ces moyens 9 sont par exemple placés à une distance suffisante des moyens 6 d'introduction de carburant dans la ligne d'échappement pour permettre une bonne homogénéisation du mélange gaz/carburant.

Par exemple, une distance supérieure à 30 cm peut être envisagée.

Ces moyens peuvent par exemple être formés par un filtre à particules catalysé dont la formulation catalytique est différente de celle des premiers moyens formant catalyseur. Cette formulation est alors caractérisée par une capacité à oxyder une forte quantité d'hydrocarbures à partir d'une certaine température, par exemple supérieure à 250°C. Cette caractéristique s'accompagne d'une température d'allumage/amorçage plus élevée que celle des premiers moyens formant catalyseur.

Par exemple, les métaux précieux de cette imprégnation catalytique de ces seconds moyens formant catalyseur peuvent être composés majoritairement de palladium.

Bien entendu, de très nombreux modes de réalisation différents peuvent être envisagés.

Ainsi par exemple, des moyens formant piège à NOx en aval des moyens d'introduction peuvent également être envisagés, que ceux-ci soient directement intégrés dans la ligne d'échappement ou qu'ils se présentent sous la forme par exemple d'un additif mélangé au carburant et destiné à se déposer avec les particules auxquelles il est mélangé, sur les moyens de dépollution intégrés dans la ligne d'échappement.

On notera également que le moteur peut être associé à des moyens d'enclenchement de post-injections de carburant dans les cylindres de celui-ci, de façon classique.

De même, les premiers moyens formant catalyseur peuvent être constitués d'une ou de plusieurs briques catalytiques dont l'imprégnation catalytique est homogène ou hétérogène. Dans ce cas, la caractéristique de température d'allumage basse et la composition en métaux précieux majoritairement en platine, s'appliquent à au moins l'un de ces éléments ou à l'une des zones de ces éléments dans le cas où ceux-ci sont hétérogènes.

Les seconds moyens formant catalyseur associés au filtre à particules, peuvent être constitués soit d'un filtre à particules catalysé, soit d'un catalyseur d'oxydation de taille variable suivi d'un filtre à particules catalysé ou non.

L'imprégnation catalytique de ces différents éléments peut être homogène ou hétérogène, et elle peut être différente ou identique.

L'imprégnation catalytique des éléments en aval des moyens d'introduction de carburant dans la ligne d'échappement, peut être constituée de toute formulation permettant d'oxyder de façon durable de fortes quantités d'hydrocarbure et donc de générer de forts exothermes. Cette formulation peut contenir ou non des métaux précieux. En revanche, cette formulation n'est pas à même d'être utilisée seule pour la dépollution HC et CO dans la ligne d'échappement concernée.

Un système de post-traitement des NOx peut également être associé à cette ligne d'échappement.

Dans ce cas, ce système est placé en aval des premiers moyens formant catalyseur. Une formulation de type piège à NOx peut également être utilisée sur le filtre à particules, cette formulation pouvant alors éventuellement être combinée avec la formulation optimisée de traitement des hydrocarbures ou déposée sur des zones différentes du filtre ou du catalyseur.

On conçoit alors que le fonctionnement d'un tel système est le suivant.

En phase de démarrage, par exemple sur cycle MVEG, les premiers moyens formant catalyseur s'amorcent rapidement de part leur formulation à faible température d'allumage et de par leur positionnement en sortie du moteur.

En phase de régénération des moyens formant filtre à particules, la température de sortie des gaz du moteur est si nécessaire augmentée afin de porter le filtre à particules catalysé ou les seconds moyens formant catalyseur à une température où ils peuvent oxyder une forte quantité d'hydrocarbures. Ensuite le système d'introduction de carburant à l'échappement entre en fonction et entraîne par oxydation des hydrocarbures, un dégagement de température important, c'est-à-dire un exotherme, dans le filtre à particules catalysé ou les seconds moyens formant catalyseur afin de porter le filtre à particules à sa température de régénération, c'est-à-dire entre 500 et 700°C.

On conçoit alors qu'une telle structure présente un certain nombre d'avantages qui résultent de la combinaison des trois éléments précités et permet d'optimiser le potentiel d'introduction de carburant à l'échappement. Les premiers moyens formant catalyseur d'oxydation en sortie du moteur engendrent un exotherme réduit lors des régénérations du filtre à particules, ce qui réduit son vieillissement et permet d'assurer une meilleure durabilité de la fonction de dépollution HC-CO.

L'éloignement entre le dispositif d'introduction de carburant à l'échappement et le filtre à particules catalysé permet d'optimiser le mélange entre le carburant introduit et les gaz d'échappement avant les seconds moyens formant catalyseur et donc d'optimiser l'efficacité du dispositif.

L'utilisation d'une formulation catalytique à forte capacité d'oxydation des hydrocarbures par exemple à base de palladium, sur le filtre à particules ou sur les seconds moyens formant catalyseur, placés juste devant ce filtre à particules, permet de générer un exotherme plus fort sans vieillissement accru.

Il est ainsi possible d'atteindre des températures plus élevées dans le filtre à particules et de garantir une régénération plus efficace et plus fiable du filtre à particules.

La possibilité de générer un fort exotherme sur le filtre à particules ou sur les seconds moyens formant catalyseur placés juste devant ce filtre à particules, permet d'optimiser l'utilisation de l'introduction de carburant à l'échappement et de limiter ainsi la pénalité en consommation liée à la régénération du filtre à particules.

Cette association permet d'obtenir de fortes températures dans le filtre sans entraîner de dilution d'huile excessive liée à la post-injection.

Les forts exothermes générés dans le filtre à particules permettent d'empêcher l'empoisonnement par le soufre de la formulation utilisée même si celle-ci y est sensible.

Un tel système trouve alors de nombreuses applications pour le post-traitement des gaz pour des véhicules notamment Diesel équipés de filtre à particules, associés ou non à un turbocompresseur et à injection directe ou non.

Bien entendu, d'autres modes de réalisation encore peuvent être envisagés.

## Revendications

1. Ligne d'échappement des gaz notamment pour moteur Diesel de véhicule automobile, du type comportant des moyens formant catalyseur d'oxydation et des moyens formant filtre à particules, des premiers moyens (5) formant catalyseur étant placés à proximité de la sortie des gaz du moteur (2) et des moyens (6,7,8) d'introduction de carburant dans la ligne d'échappement (1) étant placés en aval de ces moyens formant catalyseur (5) et en amont de seconds moyens formant catalyseur associés aux moyens formant filtre à particules (9), pour aider à leur régénération, **caractérisé en ce que** les premiers moyens formant catalyseur (5) ont une température d'allumage inférieure à celle des seconds moyens formant catalyseur (9) et **en ce que** ces seconds moyens (9) formant catalyseur sont placés à une distance supérieure à 30 cm des moyens (6) d'introduction de carburant dans la ligne d'échappement.

2. Ligne d'échappement selon la revendication 1; **caractérisée en ce que** les premiers moyens formant catalyseur (5) comportent des métaux précieux majoritairement à base de platine.

3. Ligne d'échappement selon la revendication 1 ou 2, **caractérisée en ce que** les seconds moyens formant catalyseur comportent des métaux précieux majoritairement à base de palladium.

4. Ligne d'échappement selon l'une quelconque des revendications précédentes, **caractérisée en ce que** les seconds moyens formant catalyseur et les moyens formant filtre à particules sont intégrés sur un même support.

5. Ligne d'échappement selon l'une quelconque des revendications 1 à 3, **caractérisée en ce que** les seconds moyens formant catalyseur et les moyens formant filtre à particules sont intégrés sur deux supports différents.

6. Ligne d'échappement selon l'une quelconque des revendications précédentes, **caractérisée en ce qu'**elle comporte des moyens formant piège à NOx en aval des moyens d'introduction.

7. Ligne d'échappement selon l'une quelconque des revendications précédentes, **caractérisée en ce que** le carburant comporte un additif d'aide au traitement des gaz et à la régénération des moyens formant filtre à particules.

8. Ligne d'échappement selon l'une quelconque des revendications précédentes, **caractérisée en ce que** le moteur (2) est associé à des moyens d'aide à la régénération des moyens formant filtre à particules, par déclenchement d'une phase de post-injection de carburant dans les cylindres de celui-ci.

## Claims

1. An exhaust gas line, in particular for a motor vehicle diesel engine, of the type comprising means forming an oxidation catalyst and means forming a particle filter, first catalyst-forming means (5) being placed close to the outlet of the engine gases (2) and means (6, 7, 8) for introducing fuel in the exhaust line (1) being placed downstream of these catalyst-forming means (5) and upstream of second catalyst-forming means associated with the particle filter-forming means (9), to assist in their regeneration, **characterized in that** the first catalyst-forming means (5) have a lower igniting temperature than that of the second catalyst-forming means (9) and **in that** these second catalyst-forming means (9) are placed at a distance greater than 30 cm from the means (6) for introducing fuel in the exhaust line.

2. The exhaust line according to Claim 1, **characterized in that** the first catalyst-forming means (5) comprise precious metals which are mainly platinum-based.

3. The exhaust line according to Claim 1 or 2, **characterized in that** the second catalyst-forming means comprise precious metals which are mainly palladium-based.

4. The exhaust line according to any one of the preceding claims, **characterized in that** the second catalyst-forming means and the particle filter-forming means are integrated on the same support.

5. The exhaust line according to any one of Claims 1 to 3, **characterized in that** the second catalyst-forming means and the particle filter-forming means are integrated on two different supports.

6. The exhaust line according to any one of the preceding claims, **characterized in that** it comprises NOx trapforming means downstream of the introducing means.

7. The exhaust line according to any one of the preceding claims, **characterized in that** the fuel comprises an assisting additive for the processing of the gases and for the regeneration of the particle filter-forming means.

8. The exhaust line according to any one of the preceding claims, **characterized in that** the engine (2) is associated with means for assisting the regeneration of the particle filter-forming means by activation of a fuel post-injection phase in the cylinders thereof.

## Patentansprüche

1. Abgasleitung, insbesondere für Kraftfahrzeugdieselmotor, des Typs, der Mittel aufweist, die einen Oxidationskatalysator bilden, und Mittel, die ein Partikelfilter bilden, wobei erste Mittel (5), die einen Katalysator bilden, in der Nähe des Ausgangs der Gase aus dem Motor (2) platziert sind und Mittel (6, 7, 8) zum Einführen von Kraftstoff in die Abgasleitung (1) stromabwärts dieser Mittel, die einen Katalysator (5) bilden, und stromaufwärts zweiter Mittel, die einen Katalysator bilden, der mit den Mitteln verbunden ist, die ein Partikelfilter (9) bilden, platziert sind, um ihre Regenerierung zu unterstützen, **dadurch gekennzeichnet, dass** die ersten Mittel, die einen Katalysator (5) bilden, eine Zündtemperatur haben, die kleiner ist als die der zweiten Mittel, die einen Katalysator (9) bilden, und dass diese zweiten Mittel (9), die einen Katalysator bilden, in einer Entfernung größer als 30 cm von den Mitteln (6) zum Einführen von Kraftstoff in die Abgasleitung platziert sind.

2. Abgasleitung nach Anspruch 1, **dadurch gekennzeichnet, dass** die ersten Mittel, die einen Katalysator (5) bilden, Edelmetalle, hauptsächlich auf der Grundlage von Platin, enthalten.

3. Abgasleitung nach Anspruch 1 oder 2, **dadurch gekennzeichnet, dass** die zweiten Mittel, die einen Katalysator bilden, Edelmetalle, hauptsächlich auf der Grundlage von Palladium, enthalten.

4. Abgasleitung nach einem der vorhergehenden Ansprüche, **dadurch gekennzeichnet, dass** die zweiten Mittel, die einen Katalysator bilden, und die Mittel, die ein Partikelfilter bilden, auf einem gleichen Träger integriert sind.

5. Abgasleitung nach einem der Ansprüche 1 bis 3, **dadurch gekennzeichnet, dass** die zweiten Mittel, die einen Katalysator bilden, und die Mittel, die ein Partikelfilter bilden, auf zwei unterschiedlichen Trägern integriert sind.

6. Abgasleitung nach einem der vorhergehenden Ansprüche, **dadurch gekennzeichnet, dass** sie Mittel aufweist, die eine NOx-Falle stromabwärts der Einführmittel bilden.

7. Abgasleitung nach einem der vorhergehenden Ansprüche, **dadurch gekennzeichnet, dass** der Kraftstoff einen Zusatzstoff zum Unterstützen der Behandlung der Gase und zur Regenerierung der Mittel, die ein Partikelfilter bilden, enthält.

8. Abgasleitung nach einem der vorhergehenden Ansprüche, **dadurch gekennzeichnet, dass** der Motor (2) mit Mitteln zum Unterstützen der Regenerierung der Mittel, die ein Partikelfilter bilden, durch Auslösen einer Kraftstoff-Nachinjektionsphase in dessen Zylindern verbunden ist.
